(19) Europäisches Patentamt
European Patent Office
Office européen des brevets

(11) Veröffentlichungsnummer: **0 284 863 B1**

(12) **EUROPÄISCHE PATENTSCHRIFT**

(45) Veröffentlichungstag der Patentschrift: **02.12.92**

(51) Int. Cl.5: **C08G 77/38**, C09D 183/07

(21) Anmeldenummer: **88103951.5**

(22) Anmeldetag: **12.03.88**

# (54) (Meth)acrylsäureestermodifizierte Organopolysiloxane, Verfahren zu ihrer Herstellung und ihre Verwendung als abhäsive Beschichtungsmassen.

(30) Priorität: **27.03.87 DE 3710238**

(43) Veröffentlichungstag der Anmeldung:
**05.10.88 Patentblatt 88/40**

(45) Bekanntmachung des Hinweises auf die Patenterteilung:
**02.12.92 Patentblatt 92/49**

(84) Benannte Vertragsstaaten:
**BE CH DE ES FR GB IT LI NL**

(56) Entgegenhaltungen:
**EP-A- 0 159 729**
**EP-A- 0 168 713**
**EP-A- 0 254 799**
**DE-A- 2 747 233**

(73) Patentinhaber: **Th. Goldschmidt AG**
**Goldschmidtstrasse 100 Postfach 101461**
**W-4300 Essen 1(DE)**

(72) Erfinder: **Weitemeyer, Christian, Dr.**
**Sundernholz 67**
**W-4300 Essen(DE)**
Erfinder: **Wewers, Dietmar, Dr.**
**Fernewaldstrasse 194**
**W-4250 Bottrop(DE)**
Erfinder: **Rogler, Wolfgang, Dr.**
**Frankenstrasse 44**
**W-8521 Möhrendorf(DE)**
Erfinder: **Zapf, Frederic, Dr.**
**Kneippstrasse 2**
**W-8520 Erlangen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft neue mit (Meth)acrylsäureestern modifizierte Organopolysiloxane sowie ihre Herstellung und die Verwendung dieser Verbindungen als abhäsive Beschichtungsmassen. Dabei soll der Ausdruck (Meth)acrylsäureester sowohl Acrylsäureester wie Methacrylsäureester umfassen.

Mit (Meth)acrylsäureester modifizierte Organopolysiloxane haben sich als mit energiereicher Stahlung härtbare Bindemittel z.B. für Druckfarben und zur Herstellung von Lackbindemitteln oder Beschichtungsmitteln für Papier, Holz- und Metalloberflächen bewährt. Sie können insbesondere als abhäsive Beschichtungsmittel verwendet werden. Die Härtung erfolgt insbesondere nach Zusatz bekannter Initiatoren, wie z.B. Benzophenon und seiner Derivate, durch UV-Strahlung in kürzester Zeit.

Die bekannten (meth)acrylsäureestermodifizierten Polysiloxane unterscheiden sich in der Struktur der gerüstbildenden Polysiloxane, deren Substitution und in den verwendeten acrylatesterhaltigen, as das Siloxangerüst gebundenen organischen Gruppen. Diese können mit dem Gerüst des Organopolysiloxans über SiOC- oder SiC-Bindungen verbunden sein.

Verfahren zur Herstellung solcher Verbindungen und deren Verwendung sind in der Patentliteratur mehrfach beschrieben worden. Zum Stand der Technik wird die DE-PS 27 47 233 genannt. Sie betrifft ein Verfahren zur Herstellung von mit (Meth)acrylsäureestern modifizierten Organopolysiloxanen durch Umsetzung von -COH-Gruppen aufweisenden (Meth)acrylsäureestern mit Organopolysiloxanen, die SiX-Gruppen (X = Alkoxy, Hydroxyl oder Chlor) aufweisen, gegebenenfalls in Gegenwart von Katalysatoren, mit dem Kennzeichen, daß man als Organopolysiloxane solche der Formel

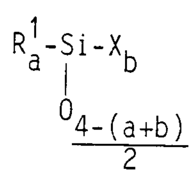

| | |
|---|---|
| $R^1$ | = Alkylgruppe mit 1 bis 4 C-Atomen und/oder eine Phenylgruppe; |
| X | = Chlor oder eine $OR^2$-Gruppe; |
| $R^2$ | = Alkylgruppe mit 1 bis 4 C-Atomen und/oder Wasserstoff; |
| a | = 1,0 bis 2,0; |
| b | = 0,02 bis 1,6; |
| a + b | $\leqq$ 2,66; |

wobei das Siloxanmolekül 3 bis 100 Si-Atome aufweist und als (Meth)acrylsäureester Pentaerythrittri(meth)-acrylat verwendet, wobei, bezogen auf COH- und SiX-Gruppen, 0,05 Mol bis äquimolare Mengen des Pentaerythritesters eingesetzt werden.

Eine Weiterbildung dieses Verfahrens kann der DE-PS 29 48 708 entnommen werden, wobei das dort beschriebene Verfahren das Kennzeichen aufweist, daß man Organopolysiloxane der Formel

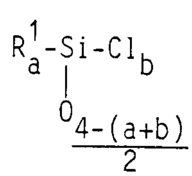

($R^1$ = Alkyl mit 1 bis 4 Kohlenstoffatomen, Vinyl und/oder Phenyl, mit der Maßgabe, daß mindestens 90 Mol-% der Gruppen $R^1$ Methyl sind;
a = Wert von 1,8 bis 2,2; b = Wert von 0,004 bis 0,5) zunächst mit, bezogen auf SiCl-Gruppen, mindestens 2-molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Abhäsive Beschichtungsmassen mit ausgezeichneter Haftung zum Untergrund bei guten abhäsiven

Eigenschaften ihrer Oberfläche gegenüber Klebemitteln sind in der DE-PS 34 26 087 beschrieben. Diese Beschichtungsmassen bestehen aus einem äquilibrierten Organopolysiloxan mit im Mittel > 25 bis < 200 Si-Atomen, weiter aus 2 bis 30 Gew.-% Organopolysiloxanen mit im Mittel 2 bis 25 Si-Atomen und aus 2 bis 30 Gew.-% Organopolysiloxanen mit im Mittel 200 bis 2000 Si-Atomen.

Derartige (meth)acrylsäureestermodifizierte Organopolysiloxangemische können insbesondere dadurch hergestellt werden, daß man Organopolysiloxane der allgemeinen Formel

$$\begin{array}{c} R_a-\underset{\displaystyle O_{\frac{4-(a+b)}{2}}}{\overset{}{\underset{|}{Si}}}-X_b \end{array}$$

wobei

- R ein Alkylrest mit 1 bis 4 C-Atome, ein Vinylrest und/oder ein Phenylrest,
- X ein hydrolysierbarer Rest oder ein Hydroxylrest ist,
- a einen Wert von 1,0 bis 2,2,
- b einen Wert von 0,001 bis 1,6 hat,

mit Hydroxylgruppen enthaltenden (Meth)acrylsäureestern, vorzugsweise in äquimolaren Mengen, bezogen auf COH- und SiX-Gruppen, umsetzt, wobei man entweder

a) Organopolysiloxangemische verwendet, welche aus äquilibrierten Organopolysiloxanen mit im Mittel > 25 und < 200 Si-Atomen und weiter aus niedrigermolekularen Organopolysiloxanen mit im Mittel 2 bis 25 Si-Atomen und aus höhermolekularen Organopolysiloxanen mit im Mittel 200 bis 2000 Si-Atomen in solchen Mengen bestehen, daß nach der Umsetzung mit den (Meth)acrylsäureestern die niedrigermolekularen und die höhermolekularen modifizierten Organopolysiloxane jeweils in Mengen von 2 bis 30 Gew.-%, bezogen auf das Gesamtgewicht der Mischung, vorliegen, oder

b) die niedrig-, mittel- und hochmolekularen Organopolysiloxane getrennt umsetzt und die Umsetzungsprodukte in den geforderten Gewichtsverhältnissen mischt.

Die vorliegende Erfindung betrifft neuartige (Meth)acrylatestergruppen enthaltende Organopolysiloxane, bei denen die (meth)acrylatesterhaltigen organischen Gruppen über eine SiC-Bindung mit dem Polysiloxangerüst verbunden sind.

Der Erfindung liegt insbesondere die Aufgabe zugrunde, (meth)acrylsäureestermodifizierte Organopolysiloxane zu finden, welche in einfacher Reaktion aus leicht zugänglichen Ausgangsverbindungen hergestellt werden können. Dabei sollen die neuartigen (meth)acrylsäureestermodifizierten Organopolysiloxane als abhäsive Beschichtungsmittel verwendbar sein. Sie sollen deshalb insbesondere frei von Inhaltsstoffen sein, die nicht mit (Meth)acrylsäureestergruppen modifiziert sind und aus der Beschichtungsmasse an deren Oberfläche wandern können. Derartige nichtmodifizierte, zur Migration befähigte Bestandteile würden die ahäsiven Eigenschaften negativ beeinflussen und außerdem die Restklebeigenschaften der von den abhäsiven Schichten abgezogenen klebenden Produkte verringern.

Es wurde nun gefunden, daß (meth)acrylsäureestermodifizierte Organopolysiloxane in einfacher Weise und aus leicht zugänglichen Ausgangsverbindungen hergestellt werden können und das geforderte Eigenschaftsprofil aufweisen, wenn sie der allgemeinen Formel

$$R^1_a-\underset{\displaystyle O_{\frac{4-(a+b)}{2}}}{\underset{|}{Si}}-[R^2-(O\overset{\displaystyle O}{\overset{\|}{C}}OQ)_c]_b \qquad \mathrm{I}$$

- $R^1$ = Alkylgruppe mit 1 bis 4 Kohlenstoffatomen, Phenylgruppe oder Alkarylgruppe der allgemeinen Formel

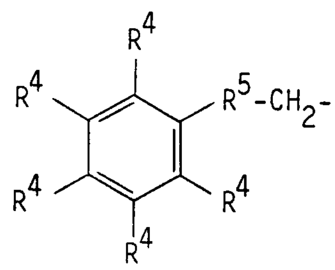

$R^4$ = gleich oder verschieden und Wasserstoffrest, Alkylrest mit 1 bis 12 Kohlenstoffatomen, Halogenrest,

$R^5$ = geradkettige oder verzweigte Alkylengruppe mit 1 bis 8 Kohlenstoffatomen,

wobei diese Gruppen im durchschnittlichen Molekül nebeneinander vorliegen können,

| | | |
|---|---|---|
| $R^2$ | = | (c+1)-wertige Kohlenwasserstoffbrücke mit 1 bis 20 Kohlenstoffatomen, die Ethergruppen aufweisen kann und an der seitenständig (Meth)acrylsäureester gebunden sein können, |
| Q | = | um eine Hydroxylgruppe verminderter Rest eines Di- oder Polyols, dessen übrige Hydroxylgruppe(n) mit (Meth)acrylsäure verestert sind, |
| a | = | 1,6 bis 2,2, |
| b | = | 0,001 bis 1,6, |
| c | = | 1 bis 4, |
| a + b | ≦ | 3, |

entsprechen.

Die Reste $R^1$ sind Alkylgruppen mit 1 bis 4 Kohlenstoffatomen, wie z.B. Methyl-, Ethyl-, Propyl-, Isopropyl-, Butyl- und Isobutylgruppen, wobei jedoch die Methylgruppe bevorzugt ist. $R^1$ kann auch die Bedeutung einer Phenylgruppe haben. Ist $R^1$ eine Alkarylgruppe, kann diese z.B. eine β-Phenylethyl-, β-Phenylpropyl-, γ-Phenylpropyl-, o-Methylphenylethyl-, 3,5-Dimethylphenylethyl-, p-Nonylphenylethyl-, o-Bromphenylethyl-, 3,5-Dibromphenylethyl-, p-Chlorphenylethyl- oder 3,5-Dichlorphenylethylgruppesein. Im durchschnittlichen Molekül können die Alkyl-, Phenyl- und Alkarylgruppen nebeneinander vorliegen.

$R^2$ ist eine mehrwertige Kohlenwasserstoffbrücke, deren Wertigkeit sich aus der Beziehung c + 1 ergibt. Diese Kohlenwasserstoffbrücke kann 1 bis 20 Kohlenstoffatome aufweisen. Sie ist im einfachsten Falle die Gruppe $-CH_2-$. In diesem Fall ist der Wert von c + 1 = 2. Weitere mögliche zwei- oder mehrwertige Kohlenwasserstoffbrücken können die Formel

$-(CH_2)_3-$, $-(CH_2)_4-$, 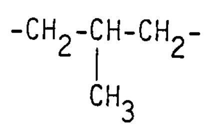, $-CH_2CH_2C(CH_3)_2-$,

$-CH_2CH_2C(CH_3)_2(CH_2)_3-$, $-CH_2CH_2C_6H_4-$, 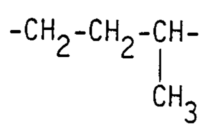

haben.

Die Kohlenwasserstoffbrücken können auch Ethergruppen aufweisen. Beispiele solcher Kohlenwasserstoffbrücken mit Ethergruppen sind

$-(CH_2)_3O(CH_2)_3-$, 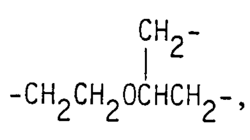, 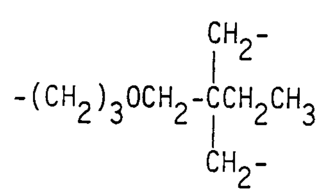 .

An die Kohlenwasserstoffbrücke können seitenständig eine oder mehrere (Meth)acrylsäureestergruppen gebunden sein. Derartige mehrwertige, estersubstituierte Kohlenwasserstoffbrücken können durch folgende

Formeln wiedergegeben werden

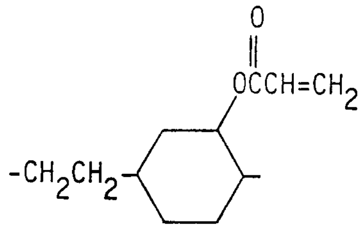 , 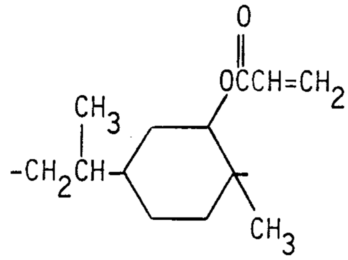 ,

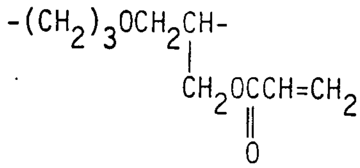

Q ist der um eine Hydroxylgruppe verminderte Rest eines Di- oder Polyols, dessen übrige Hydroxylgruppe(n) mit (Meth)acrylsäure verestert sind. Derartige mit (Meth)acrylsäure veresterte Polyole, welche noch eine Hydroxylgruppe aufweisen, sind im Handel erhältliche und leicht zugängliche, preisgünstige Verbindungen. Dem Rest Q können als Polyole Ethylenglykol, Propylenglykol, Glycerin, Trimethylolethan, Trimethylolpropan und Pentaerythrit zugrunde liegen. Weitere geeignete Polyole sind solche Verbindungen, die aus zwei oder mehr Di- oder Polyalkoholen durch intermolekulare Kondensation entstehen. Beispeile solcher Alkohole sind die Di- oder Polyglycerine. Dabei kann an die Hydroxylgruppen der Polyalkohole vor deren Veresterung mit (Meth)acrylsäure Alkylenoxid, insbesondere Ethylenoxid und/oder Propylenoxid angelagert werden. In den nachfolgenden, der zusätzlichen Erläuterung diendenden Formeln sind mögliche Reste Q gezeigt.

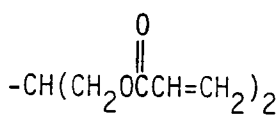 , 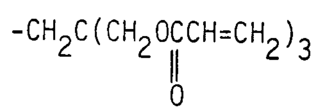 ,

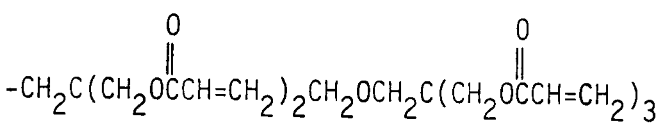 ,

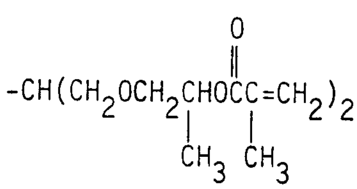 .

Der Index a hat einen Wert von 1,6 bis 2,2. Vorzugsweise hat a einen Wert von 1,8 bis 2,0.

b hat einen Wert von 0,001 bis 1,6. Bevorzugte b-Werte liegen in einem Bereich von 0,002 bis 0,4.

c hat einen Wert von 1 bis 4, vorzugsweise einen Wert von 1 bis 2.

Beispiele erfindungsgemäßer Verbindungen sind

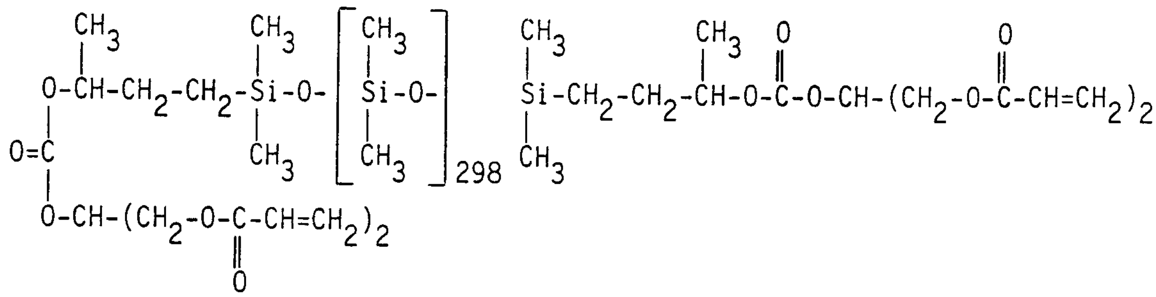

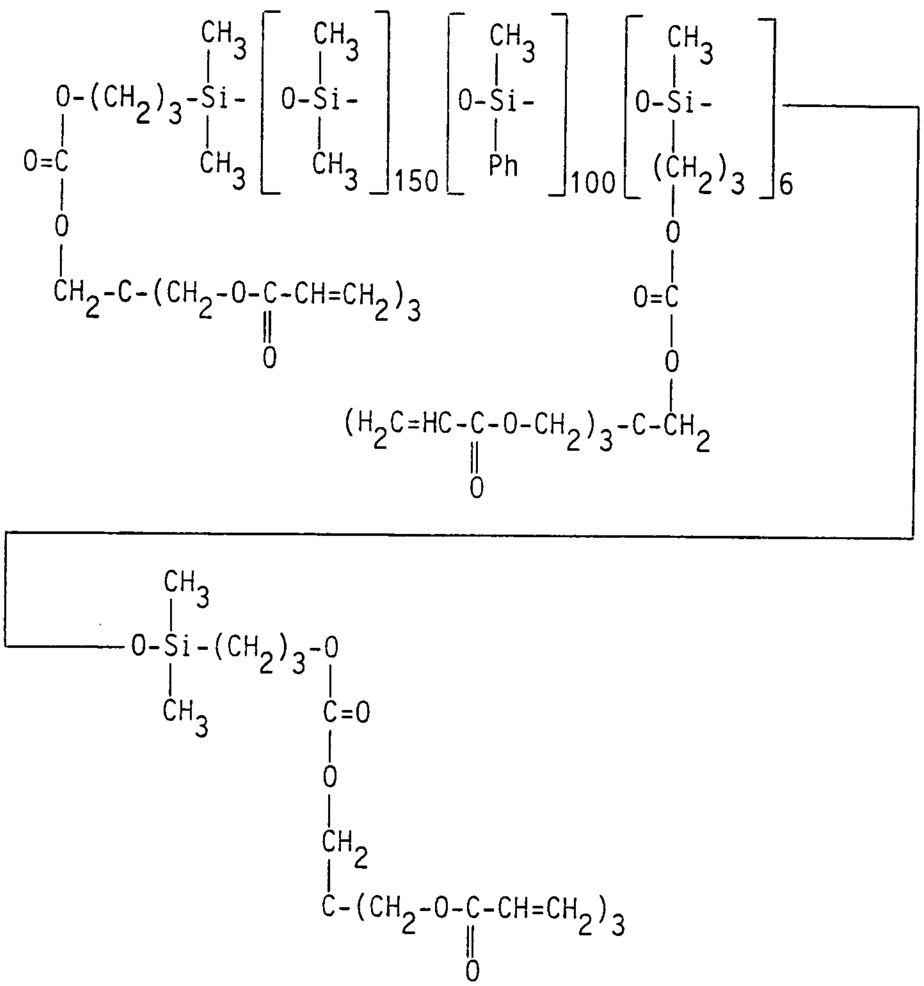

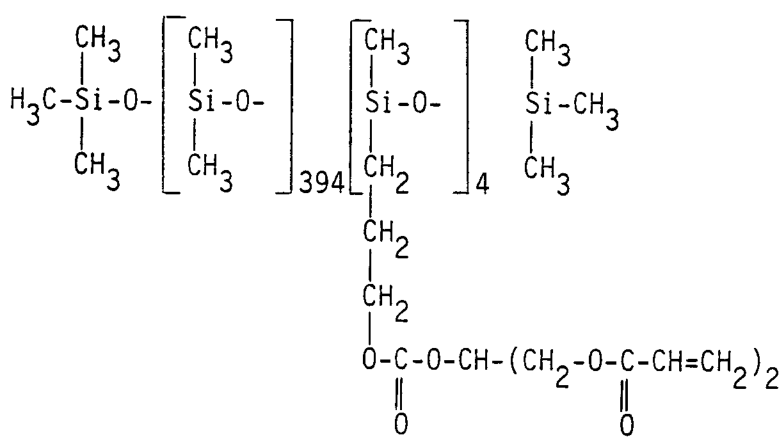

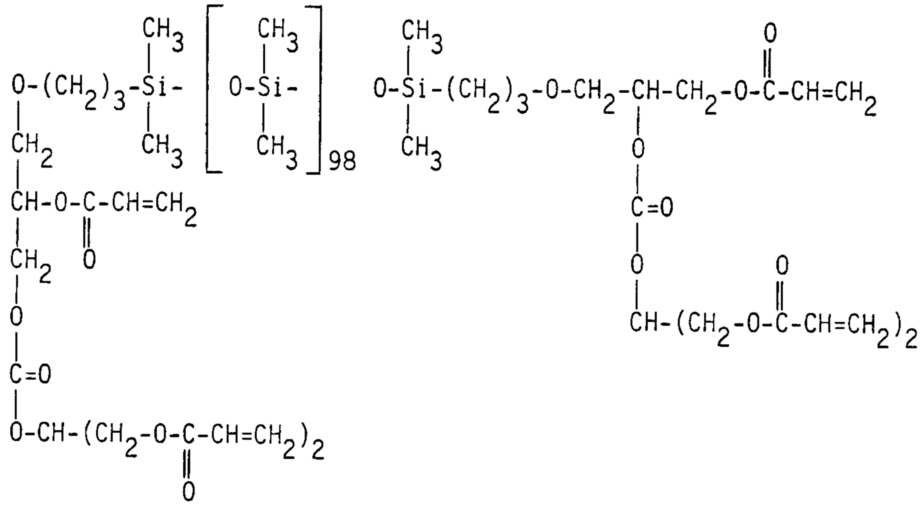

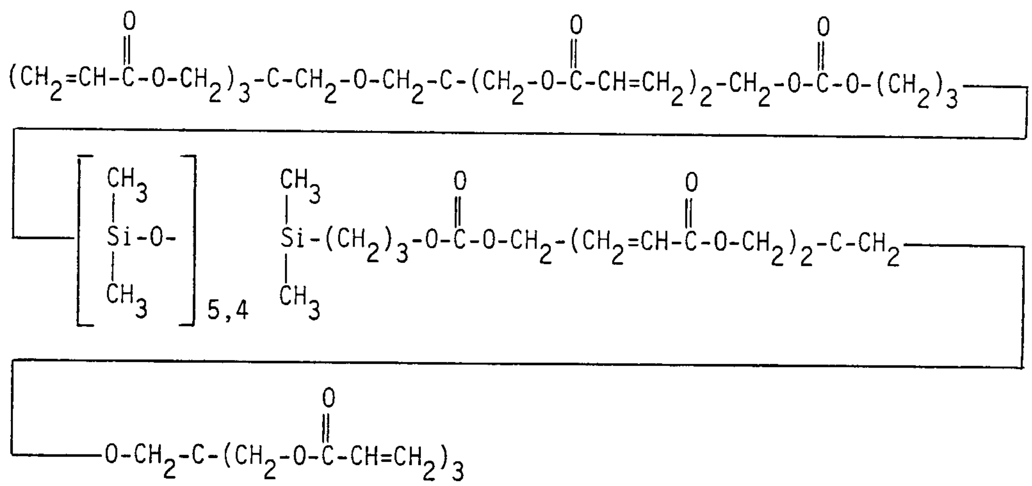

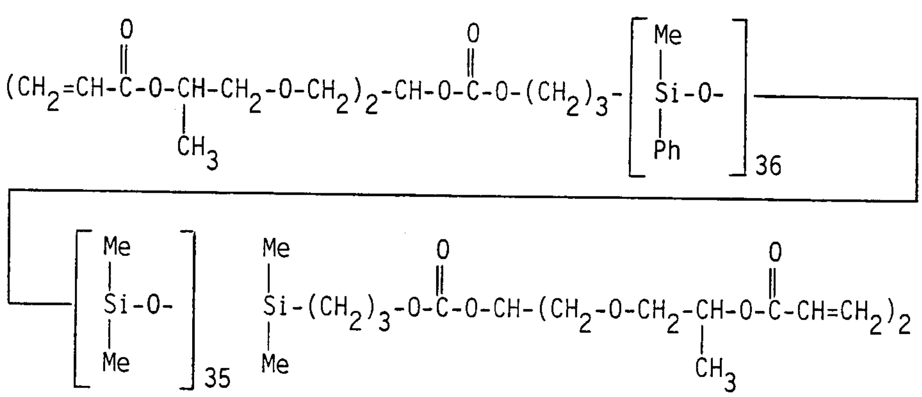

Die erfindungsgemäßen neuen (meth)acrylsäureestermodifizierten Organopolysiloxane sind durch Strahlung härtbar. Sie zeigen bereits im nicht ausgehärteten Zustand hohe Hydrolysebeständigkeit.

Ein weiterer Gegenstand vorliegender Erfindung besteht in einem Verfahren zur Herstellung dieser Verbindungen.

Das erfindungsgemäße Verfahren ist dabei dadurch gekennzeichnet, daß man a) Organopolysiloxane

der allgemeinen Formel

$$R^1_a\text{-}\underset{\underset{O_{\frac{4-(a+b)}{2}}}{|}}{Si}\text{-}[R^2\text{-}(OH)_c]_b \qquad II$$

$R^1$, $R^2$, a, b wie bereits definiert, mit, bezogen auf OH-Gruppen, mindestens äquimolaren Mengen der Verbindungen der allgemeinen Formel

$$R^3\overset{\overset{O}{\|}}{C}R^3 \qquad III$$

$R^3$ = Chlorrest oder Alkoxygruppe mit 1 bis 4 Kohlenstoffatomen, umsetzt, gegebenenfalls überschüssige Verbindungen

$$R^3\overset{\overset{O}{\|}}{C}R^3 \qquad III$$

entfernt, und das erhaltene Reaktionsprodukt mit, bezogen auf $R^3$-Reste, äquimolaren Mengen Verbindungen der allgemeinen Formel Q-OH, Q wie bereits definiert, umsetzt oder

b) zunächst Verbindungen der Formel Q-OH mit mindestens äquimolaren Mengen Verbindungen der Formel

$$R^3\overset{\overset{O}{\|}}{C}R^3 \qquad III$$

umsetzt und das Reaktionsprodukt mit äquimolaren Mengen des Organopolysiloxans unter sonst gleichen Reaktionsbedingungen umsetzt.

Die Ausgangsverbindungen der allgemeinen Formel

$$R^1_a\text{-}\underset{\underset{O_{\frac{4-(a+b)}{2}}}{|}}{Si}\text{-}[R^2\text{-}(OH)_c]_b \qquad II$$

sind aus dem Stand der Technik bekannte, leicht zugängliche Verbindungen, deren Herstellung z.B. in "Chemie und Technologie der Silicone" von W. Noll, Verlag Chemie, 1968, Seite 139 ff. beschrieben ist.

Die Reste $R^1$ und $R^2$ sowie die Indices a, b und c haben die bereits oben angegebene Bedeutung.

Diese Verbindungen der allgemeinen Formel II werden bei der ersten Verfahrensvariante zunächst mit mindestens äquimolaren Mengen an Verbindungen der allgemeinen Formel

$$R^3\overset{\overset{O}{\|}}{C}R^3 \qquad III$$

umgesetzt. Handelt es sich bei dem Rest $R^3$ um Chlorreste, erfolgt somit die Umsetzung mit Phosgen. Verwendet man Verbindungen, bei denen der Rest $R^3$ eine Alkoxygruppe ist, wählt man im allgemeinen wegen der Entfernbarkeit der freigesetzten Alkohole Alkoxygruppen mit 1 bis 4 Kohlenstoffatomen aus. Bevorzugt sind dabei Methoxy- und Ethoxygruppen.

Die Umsetzung verläuft, falls $R^3$ ein Chlorrest ist, bereits bei niedrigen Temperaturen, wie etwa Raumtemperatur. Hat $R^3$ die Bedeutung einer Alkoxygruppe, empfiehlt sich die Anwendung höherer Temperaturen, insbesondere solcher Temperaturen, bei denen der freigesetzte Alkohol $R^3OH$ destillativ entfernt werden kann. Es empfiehlt sich, gegebenenfalls nichtumgesetzte, überschüssige Verbindungen der Formel III aus dem Reaktionsgemisch abzuziehen. Das erhaltene Reaktionsprodukt wird nun mit äquimolaren Mengen Verbindungen der allgemeinen Formel Q-OH umgesetzt.

Man kann die Umsetzung in Gegenwart von Lösungsmitteln, wie z.B. Toluol oder Xylol, durchführen. Hat $R^3$ die Bedeutung eines Chlorrestes, empfiehlt es sich, den freigesetzten Chlorwasserstoff durch Zusatz von Säurefängern zu binden. Geeignete Säurefänger sind in dem Reaktionsgemisch lösliche, organische Amine, insbesondere niedrige Alkylamine, wie z.B. Triethylamin, Tripropylamin, Tributylamin oder Pyridine. Die bei der Neutralisation entstandenen Salze werden nach der Reaktion durch Filtration oder durch Zentrifugieren entfernt.

Ist $R^3$ ein Alkoxyrest, wählt man die Reaktionstemperatur zweckmäßig so hoch, daß der freigesetzte Alkohol $R^3OH$ aus dem Reaktionsgemisch abdestilliert werden kann. Dies kann gegebenenfalls durch Druckerniedrigung begünstigt werden.

Bei einer zweiten Variante des erfindungsgemäßen Verfahrens werden zunächst Verbindungen der Formel Q-OH mit mindestens äquimolaren Mengen Verbindungen der Formel

$$R^3\overset{\overset{O}{\|}}{C}R^3 \qquad III$$

umgesetzt und das so erhaltene Reaktionsprodukt dann mit den Organopolysiloxanen der allgemeinen Formel

$$R^1_a-\underset{\underset{O_{\frac{4-(a+b)}{2}}}{|}}{Si}-[\,R^2-(OH)_c\,]_b \qquad II$$

zur Reaktion gebracht. Es handelt sich dabei im wesentlichen um eine Umkehrung der Verfahrensschritte der ersten Verfahrensvariante, so daß die Ausführungen zur Reaktionsdurchführung (Temperatur, Lösungsmittel, Säurefänger) in gleicher Weise anzuwenden sind.

Der bevorzugte Verwendungszweck der erfindungsgemäßen Verbindungen besteht in ihrer Verwendung als Beschichtungsmaterialien mit abhäsiven Eigenschaften. Diese Verwendung bildet deshalb einen weiteren Gegenstand der vorliegenden Erfindung. Dabei können die erfindungsgemäßen Organopolysiloxane allein oder in Mischung mit anderen zur Copolymerisation befähigten, ungesättigten Verbindungen, wie z.B. mono-, oligo-oder polymeren Epoxy-, Ether-, Ester- und Urethanacrylaten und -methacrylaten, Estern ungesättigter Dicarbonsäuren, Allylestern sowie anderen vinylischen Verbindungen, wie Vinylaromaten oder Vinyllactamen, verwendet werden.

Es ist bei Härtung durch ultraviolette Strahlung notwendig, diesen Gemischen einen Radikalstarter, vorzugsweise in Mengen von 2 bis 10 Gew.-%, bezogen auf modifiziertes Siloxan, zuzusetzen. Die Wahl des Radikalstarters kann entsprechend dem Wellenlängenspektrum der zur Aushärtung verwendeten UV-Strahlenquelle erfolgen. Derartige Radikalstarter sind bekannt. Man kann z.B. Benzophenon, dessen Oxime

oder Benzoinether, jedoch auch andere hierfür bekannte Verbindungen verwenden. Auch die Mitverwendung von Aminen, die die Aushärtung in Gegenwart von Luftsauerstoff beschleunigen sollen, ist gebräuchlich. Ohne Zusatz von Initiatoren lassen sich die erfindungsgemäßen Organopolysiloxane z.B. durch Laserlicht, Elektronenstrahlen, $\gamma$-Strahlen aushärten.

Weitere mitverwendbare Modifizierungsmittel sind in der DE-AS 26 02 809 und DE-OS 32 18 675 genannt.

Außerdem können auch Feststoffe zugesetzt werden, um die Viskosität oder die Oberfläche zu verändern. Dazu gehören insbesondere hochdisperse Kieselsäuren oder organische Polymerisate aus Fluorkohlenwasserstoffen u.a.

In den folgenden Beispielen wird die Herstellung der erfindungsgemäßen Verbindungen gezeigt, und es werden die Eigenschaften der hieraus hergestellten strahlungsgehärteten, abhäsiven Beschichtungsmassen dargestellt.

Beispiel 1

Zu einer Lösung von 0,6 Mol Phosgen in 600 ml wasserfreiem Dichlormethan/Toluol 1 : 1 werden unter Eisbadkühlung 500 g eines $\alpha,\omega$ -Bis-(3-hydroxybutyl)-polydimethylsiloxans mit einem OH-Gehalt von 0,017 Mol/100 g in Dichlormethan unter Zusatz von 1,1 Äquivalenten Triethylamin innerhalb von 4 h zugetropft. Die Kolbentemperatur wird auf 5 ° C gehalten. Dann wird noch 1 h gerührt. Anschließend wird der Ansatz im Wasserstrahlvakuum eingeengt, mit Petrolether versetzt, der enstandene Niederschlag abfiltriert und das Lösungsmittel im Wasserstrahlvakuum bei einer Badtemperatur von 40 ° C abgezogen. Die Bestimmung hydrolysierbaren Chlors ergibt einen Gehalt an Chlorocarbonatgruppen von 0,015 Mol/100 g.

IR-Spektrum (Film): 1780 $cm^{-1}$ : CO-Chlorocarbonat

Das so erhaltene Siloxan wird innerhalb von 2 h zu äquivalenten Mengen an Glycerindiacrylat und Pyridin in Toluol bei einer Kolbentemperatur von 60 ° C getropft und weitere 4 h bei 70 bis 80 ° C gerührt. Zur Aufarbeitung wird der Ansatz im Wasserstrahlvakuum eingeengt, mit Petrolether aufgenommen, der Niederschlag abfiltriert und die flüchtigen Anteile bei 80 ° C und 0,1 mbar entfernt.

| | |
|---|---|
| Chlorgehalt: | 0,01 % |
| Viskosität (25 ° ): | 3300 mPas |
| IR-Spektrum (Film): | 1750 $cm^{-1}$ : CO-Carbonat |
| | 1735 $cm^{-1}$ : CO-Ester |

Beispiel 2

Chlorkohlensäureester von Pentaerythrittriacrylat (2-Acryloxymethyl-2-chlorcarbonyloxymethyl-1,3-diacryloxypropan)

In einem Dreihalskolben mit Rückflußkühler, Innenthermometer und Tropftrichter werden 200 ml wasserfreies Dichlormethan vorgelegt und unter Eisbadkühlung 0,3 Mol Phosgen in 160 ml Toluol zugegeben. Dann werden 59,6 g (0,2 Mol) Pentaerythrittriacrylat und 30,6 ml (0,22 Mol) Triethylamin in 50 ml Dichlormethan innerhalb 1,5 h zugetropft und eine weitere Stunde bei 3 bis 5 ° C gerührt. Nach dem Einengen des Ansatzes im Wasserstrahlvakuum wird mit Petrolether Ethylacetat aufgenommen, der Niederschlag abfiltriert und das Lösungsmittel bei einer Badtemperatur von 40 ° C im Vakuum abgezogen. Das Rohprodukt (69,1 g) hat einen Chlorgehalt von 0,27 Mol/100 g (93 % der Theorie) und wird ohne weitere Reinigung für die Umsetzungen mit den Polysiloxanen verwendet.

| | |
|---|---|
| IR-Spektrum (Film): | 1780 $cm^{-1}$ : CO-Chlorocarbonat |
| | 1730 $cm^{-1}$ : CO-Ester |

Beispiel 3

Chlorkohlensäureester von Glycerindiacrylat (2-Chlorcarbonyloxy-1,3-diacryloxypropan)

Wie in Beispiel 2 beschrieben, werden 40 g (0,2 Mol) Glycerindiacrylat mit Phosgen umgesetzt und aufgearbeitet. Das Rohprodukt hat einen Chlorgehalt von 14 % (berechnet: 13,5 %) und wird in dieser Form eingesetzt.

| | |
|---|---|
| IR-Spektrum (Film) : | 1780 $cm^{-1}$ : CO-Chlorocarbonat |
| | 1730 $cm^{-1}$ : CO-Ester |

Beispiel 4

500 g $\alpha,\omega$-Bis-(hydroxypropyl)-polydimethylsiloxan mit einem OH-Gehalt von 0,016 Mol/100 g werden in 200 g Toluol gelöst und 0,1 Mol Pyridin zugesetzt. Dann werden 29,6 g (0,08 Mol) des in Beispiel 2 hergestellten Chlorkohlensäureesters des Pentaerythrittriacrylats innerhalb von 2 h bei einer Temperatur von 60 °C zugetropft und anschließend 4 h bei 75 °C gerührt. Nach Filtration und Abtrennen der flüchtigen Anteile im Vakuum bei 0,1 mbar und 80 °C erhält man eine Ausbeute von 95 % der Theorie.

| | |
|---|---|
| Chlorgehalt: | 0,01 % |
| Viskosität: | 1400 mPas |
| IR-Spektrum (Film): | 1750 $cm^{-1}$ : CO-Carbonat |
| | 1730 $cm^{-1}$ : CO-Ester |

Beispiel 5

Analog zu Beispiel 4 werden 500 g eines Polydimethylsiloxans, das end-und seitenständig 3-Hydroxybutylgruppen aufweist und einen OH-Gehalt von 0,042 Mol/100 g besitzt, mit 51,8 g (0,2 Mol) des in Beispiel 3 hergestellten Chlorkohlensäureesters des Glycerindiacrylats zur Reaktion gebracht und aufgearbeitet.

| | |
|---|---|
| Ausbeute: | 95 % der Theorie |
| Chlorgehalt: | 0,01 % |
| Viskosität: | 1100 mPas |

Beispiel 6

268 g eines $\alpha,\omega$-Bis-(3-glycidoxypropyl)-polydimethylsiloxans mit einer Epoxydzahl von 0,019 Mol/100 g werden in 100 ml Toluol gelöst, 3,8 g Acrylsaüre und 0,4 g N,N-Dimethylbenzylamin zugesetzt und die Mischung unter Sieden bis zu einer Säurezahl von 0,0018 Mol/100 g umgesetzt. Dann wird durch Zusatz von wäßriger Bicarbonatlösung die Restsäure gebunden. Um das Wasser zu entfernen, wird Natriumsulfat zugegeben und anschließend filtriert. Nach dem Abtrennen des Lösungsmittels bei 5 mbar und 80 °C werden 252 g eines Produktes mit einem OH-Gehalt von 0,014 Mol/100 g erhalten. Dieses Produkt wird, wie in Beispiel 3 beschrieben, mit 9,2 g des in Beispiel 3 hergestellten Chlorkohlensäureesters des Glycerindiacrylats, umgesetzt und aufgearbeitet.

| | |
|---|---|
| Ausbeute: | 94 % der Theorie |
| Chlorgehalt: | 0,015 % |
| Viskosität (27 °C): | 5000 mPas |
| IR-Spektrum (Film): | 1750 $cm^{-1}$ : CO-Carbonat |
| | 1735 $cm^{-1}$ : CO-Ester |

Beispiel 7

Ein Organopolysiloxan mit einer mittleren Kettenlänge von n = 260, das aus Methylphenyl- und Dimethylsiloxyeinheiten im Verhältnis 1 : 1,5 aufgebaut und end- sowie seitenständig Hydroxypropylreste aufweist und einen OH-Wert von 0,019 Mol/100 g besitzt, wird analog Beispiel 4 mit dem Chlorkohlensäureester des Pentaerythrittriacrylats umgesetzt und aufgearbeitet.

| | |
|---|---|
| Ausbeute: | 93,5 % der Theorie |
| Brechungsindex (20 °C): | $n_D$ = 1,485 |
| IR-Spektrum (Film): | 1750 $cm^{-1}$ : CO-Carbonat |
| | 1735 $cm^{-1}$ : CO-Ester |

Beispiel 8

100 g eines $\alpha,\omega$-Bis-(3-hydroxybutyl)-polydimethylsiloxans mit einem OH-Gehalt von 0,017 Mol/100 g und 3 g Dimethylcarbonat werden bei 45 °C gerührt. Nach 20 h wird entstandenes Methanol und überschüssiges Dimethylcarbonat im Wasserstrahlvakuum entfernt. Anschließend werden 3,4 g (0,017 Mol) Glycerindiacrylat in 10 ml Toluol zugegeben und bei 40 °C gerührt. Nach 8 h wird die Temperatur für 3 h auf 70 °C erhöht und die Flüchtigen im Wasserstrahlvakuum abgetrennt und filtriert.

| | |
|---|---|
| Ausbeute: | 93 % der Theorie |
| Viskosität (25 °C): | 3300 mPas |

IR-Spektrum (Film): 1750 $cm^{-1}$ : CO-Carbonat
1735 $cm^{-1}$ : CO-Ester

Zur Überprüfung der anwendungstechnischen Eigenschaften werden die modifizierten Siloxane aus den Beispielen 1 und 4 bis 8 auf satiniertes Papier aufgebracht und bei 1,5 Mrad durch Elektronenstrahlen gehärtet. Die Auftragsmenge beträgt ca. 1,1 $g/m^2$. Als Prüfkleber werden ein Acrylat- und ein Kautschukklebeband verwendet. Zur Messung der Abhäsivität werden 30 mm breite Klebebänder aufgewalzt und anschließend bei 70 °C gelagert. Nach 24 h wird die Kraft gemessen, die benötigt wird, um das Klebeband unter einem Schälwinkel von 180 ° vom Untergrund abzuziehen. Diese Kraft wird als Trennkraft bezeichnet. Außerdem erfolgt eine Prüfung auf Adhäsion auf dem Substrat durch kräftiges Reiben mit dem Daumen. Bei mangelnder Haftung bilden sich gummiartige Krümel (sogenannter "rub off"-Test).

Tabelle

| Beispiel | Trennkraft [N] Acrylatkleber | Kautschukkleber | rub off |
|---|---|---|---|
| 1 | 0,05 | 0,75 | nein |
| 4 | 0,07 | 0,70 | nein |
| 5 | 0,10 | 0,55 | nein |
| 6 | 0,15 | 0,60 | nein |
| 7 | 0,20 | 0,85 | nein |
| 8 | 0,05 | 0,75 | nein |

Aus der Tabelle ergibt sich, daß die mit Acrylsäureestern modifizierten Organopolysiloxane die gewünschten abhäsiven Eigenschaften ergeben.

**Patentansprüche**

**Patentansprüche für folgende Vertragsstaaten : BE, CH, DE, FR, GB, IT, LI, NL**

**1.** Verbindungen der allgemeinen Formel

$$\underset{O_{\frac{4-(a+b)}{2}}}{\underset{|}{R^1_a\text{-}Si}}\text{-}[\,R^2\text{-}(O\overset{O}{\overset{\|}{C}}OQ)_c\,]_b$$

$R^1$ = Alkylgruppe mit 1 bis 4 Kohlenstoffatomen, Phenylgruppe oder Alkarylgruppe der allgemeinen Formel

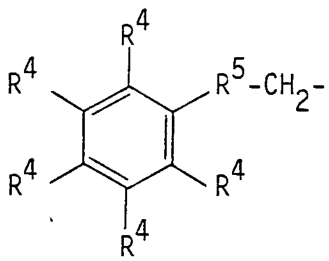

$R^4$ = gleich oder verschieden und Wasserstoffrest, Alkylrest mit 1 bis 12 Kohlenstoffatomen, Halogenrest,

$R^5$ = geradkettige oder verzweigte Alkylengruppe mit 1 bis 8 Kohlenstoffatomen,

wobei diese Gruppen im durchschnittlichen Molekül nebeneinander vorliegen können,

| | |
|---|---|
| $R^2$ | = (c+1)-wertige Kohlenwasserstoffbrücke mit 1 bis 20 Kohlenstoffatomen, die Ethergruppen aufweisen kann und an der seitenständig (Meth)acrylsäureester gebunden sein können, |
| Q | = um eine Hydroxylgruppe verminderter Rest eines Di- oder Polyols, dessen übrige Hydroxylgruppe(n) mit (Meth)acrylsäure verestert sind, |
| a | = 1,6 bis 2,2, |
| b | = 0,001 bis 1,6, |
| c | = 1 bis 4, |
| a + b | ≦ 3. |

**2.** Verfahren zur Herstellung von Verbindungen des Anspruchs 1, dadurch gekennzeichnet, daß man a) Organopolysiloxane der allgemeinen Formel

$$R^1_a\text{-}\underset{\substack{|\\ O_{\frac{4-(a+b)}{2}}}}{Si}\text{-}[R^2\text{-}(OH)_c]_b$$

$R^1$, $R^2$, a, b wie bereits definiert, mit, bezogen auf OH-Gruppen, mindestens äquimolaren Mengen Verbindungen der allgemeinen Formel

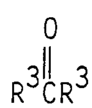

$R^3$ = Chlorrest oder Alkoxygruppe mit 1 bis 4 Kohlenstoffatomen, umsetzt, gegebenenfalls überschüssige Verbindungen

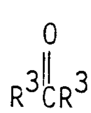

entfernt, und das erhaltene Reaktionsprodukt mit, bezogen auf $R^3$-Reste, äquimolaren Mengen Verbindungen der allgemeinen Formel Q-OH, Q wie bereits definiert, umsetzt oder

b) zunächst Verbindungen der Formel Q-OH mit mindestens äquimolaren Mengen Verbindungen der Formel

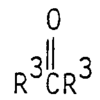

umsetzt und das Reaktionsprodukt mit äquimolaren Mengen des Organopolysiloxans unter sonst gleichen Reaktionsbedingungen umsetzt.

**3.** Verfahren nach Anspruch 2, dadurch gekennzeichnet, daß man die Umsetzungen in Gegenwart von Lösungsmitteln durchführt.

**4.** Verfahren nach Anspruch 2 oder 3, dadurch gekennzeichnet, daß man, falls $R^3$ ein Chlorrest ist, in Gegenwart von Säurefängern, insbesondere niedrigen Alkylaminen, arbeitet.

**5.** Verfahren nach Anspruch 2 oder 3, dadurch gekennzeichnet, daß man, falls $R^3$ ein Alkoxyrest ist, den freiwerdenden Alkohol $R^3OH$ abdestilliert.

**6.** Verwendung der Verbindungen des Anspruchs 1 als abhäsive Beschichtungsmassen.

**Patentansprüche für folgenden Vertragsstaat : ES**

**1.** Verfahren zur Herstellung von (Meth)acrylsäureester-Gruppen aufweisenden Organopolysiloxanen der allgemeinen Formel

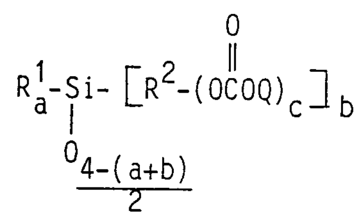

wobei

$R^1$ = Alkylgruppe mit 1 bis 4 Kohlenstoffatomen, Phenylgruppe oder Alkarylgruppe der allgemeinen Formel

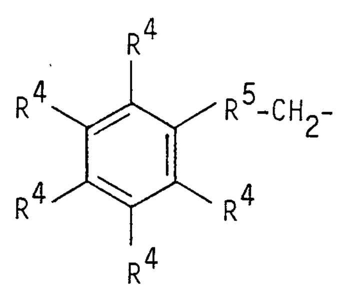

$R^4$ = gleich oder verschieden und Wasserstoffrest, Alkylrest mit 1 bis 12 Kohlenstoffatomen, Halogenrest,

$R^5$ = geradkettige oder verzweigte Alkylengruppe mit 1 bis 8 Kohlenstoffatomen,

wobei diese Gruppen im durchschnittlichen Molekül nebeneinander vorliegen können,

$R^2$ = (c + 1)-wertige Kohlenwasserstoffbrücke mit 1 bis 20 Kohlenstoffatomen, die Ethergruppen aufweisen kann und an der seitenständig (Meth)acrylsäureester gebunden sein können,

Q = um eine Hydroxylgruppe verminderter Rest eines Di- oder Polyols, dessen übrige Hydroxylgruppe(n) mit (Meth)acrylsäure verestert sind,

a = 1,6 bis 2,2,

b = 0,001 bis 1,6,
c = 1 bis 4,
a + b ≦ 3 ist,

dadurch gekennzeichnet, daß man a) Organopolysiloxane der allgemeinen Formel

$$R^1_a\text{-}\underset{\substack{|\\ O_{\frac{4-(a+b)}{2}}}}{Si}\text{-}\left[R^2\text{-}(OH)_c\right]_b$$

$R^1$, $R^2$, a, b und c wie bereits definiert, mit, bezogen auf OH-Gruppen, mindestens äquimolaren Mengen Verbindungen der allgemeinen Formel

$$R^3\overset{\overset{O}{\|}}{C}R^3$$

$R^3$ = Chlorrest oder Alkoxygruppe mit 1 bis 4 Kohlenstoffatomen, umsetzt, gegebenenfalls überschüssige Verbindungen

$$R^3\overset{\overset{O}{\|}}{C}R^3$$

entfernt, und das erhaltene Reaktionsprodukt mit, bezogen auf $R^3$-Reste, äquimolaren Mengen Verbindungen der allgemeinen Formel Q-OH, Q wie bereits definiert, umsetzt oder

b) zunächst Verbindungen der Formel Q-OH mit mindestens äquimolaren Mengen Verbindungen der Formel

$$R^3\overset{\overset{O}{\|}}{C}R^3$$

umsetzt und das Reaktionsprodukt mit äquimolaren Mengen des Organopolysiloxans unter sonst gleichen Reaktionsbedingungen umsetzt.

**2.** Verfahren nach Anspruch 1, dadurch gekennzeichnet, daß man die Umsetzungen in Gegenwart von Lösungsmitteln durchführt.

**3.** Verfahren nach Anspruch 2, dadurch gekennzeichnet, daß man, falls $R^3$ ein Chlorrest ist, in Gegenwart von Säurefängern, insbesondere niedrigen Alkylaminen, arbeitet.

**4.** Verfahren nach Anspruch 1 oder 2, dadurch gekennzeichnet, daß man, falls $R^3$ ein Alkoxyrest ist, den freiwerdenden Alkohol $R^3OH$ abdestilliert.

**5.** Verwendung der Verbindungen des Anspruchs 1 als abhäsive Beschichtungsmassen.

**Claims**
**Claims for the following Contracting States : BE, CH, DE, FR, GB, IT, LI, NL**

**1.** Compounds of the general formula

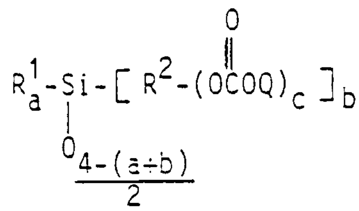

in which

$R^1$ is an alkyl group having 1 to 4 carbon atoms, a phenyl group or alkaryl group of the general formula

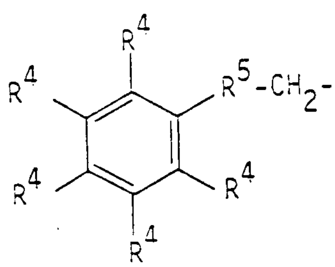

$R^4$ are identical or different and are a hydrogen radical, an alkyl radical having 1 to 12 carbon atoms or a halogen radical,

$R^5$ is a straight-chain or branched alkylene group having 1 to 8 carbon atoms,

where these groups in the average molecule can be present next to one another,

$R^2$ is a (c + 1)-valent hydrocarbon bridge having 1 to 20 carbon atoms, which can contain ether groups and to which lateral (meth)acrylic acid esters can be bonded,

Q is a radical of a di- or polyol which is reduced by one hydroxyl group, whose other hydroxyl group(s) is/are esterified with (meth)acrylic acid,

a is 1.6 to 2.2,

b is 0.001 to 1.6,

c is 1 to 4,

a + b is $\leqq 3$.

**2.** Process for the preparation of compounds of Claim 1, characterised in that

a) organopolysiloxanes of the general formula

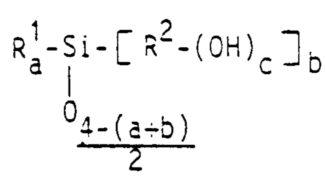

in which
$R^1$, $R^2$, a and b are as already defined, are reacted with, relative to OH groups, at least equimolar amounts of compounds of the general formula

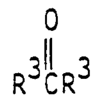

$R^3$ is a chlorine radical or alkoxy group having 1 to 4 carbon atoms, if necessary excess compounds

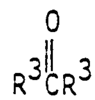

are removed, and the reaction product obtained is reacted with, relative to $R^3$ radicals, equimolar amounts of compounds of the general formula Q-OH, where Q is as already defined, or
b) first compounds of the formula Q-OH are reacted with at least equimolar amounts of compounds of the formula

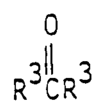

and the reaction product is reacted with equimolar amounts of the organopolysiloxane under otherwise identical reaction conditions.

**3.** Process according to Claim 2, characterised in that the reactions are carried out in the presence of solvents.

**4.** Process according to Claim 2 or 3, characterised in that, if $R^3$ is a chlorine radical, the reaction is carried out in the presence of acid scavengers, in particular lower alkylamines.

**5.** Process according to Claim 2 or 3, characterised in that, if $R^3$ is an alkoxy radical, the alcohol $R^3OH$ set free is removed by distillation.

**6.** Use of the compounds of the Claim 1 as abhesive coating materials.

**Claims for the following Contracting State : ES**

**1.** Process for the preparation of organopolysiloxanes containing (meth)acrylic acid ester groups, of the general formula

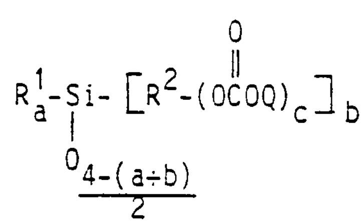

in which

$R^1$ is an alkyl group having 1 to 4 carbon atoms, a phenyl group or alkaryl group of the general formula

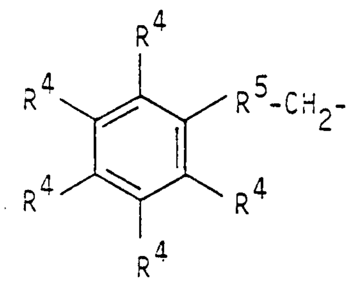

$R^4$ are identical or different and are a hydrogen radical, an alkyl radical having 1 to 12 carbon atoms or a halogen radical,

$R^5$ is a straight-chain or branched alkylene group having 1 to 8 carbon atoms,

where these groups in the average molecule can be present next to one another,

$R^2$ is a (c + 1)-valent hydrocarbon bridge having 1 to 20 carbon atoms, which can contain ether groups and to which lateral (meth)acrylic acid esters can be bonded,

Q is a radical of a di- or polyol which is reduced by one hydroxyl group, whose other hydroxyl group(s) is/are esterified with (meth)acrylic acid,

a is 1.6 to 2.2,

b is 0.001 to 1.6,

c is 1 to 4,

a + b is ≦ 3,

characterised in that

a) organopolysiloxanes of the general formula

$$R^1_a\text{-}\underset{\underset{O_{\frac{4-(a+b)}{2}}}{|}}{Si}\text{-}\left[R^2\text{-}(OH)_c\right]_b$$

in which

$R^1$, $R^2$, a, b and c are as already defined, are reacted with, relative to OH groups, at least equimolar amounts of compounds of the general formula

$$R^3\overset{\overset{O}{\|}}{C}R^3$$

$R^3$ is a chlorine radical or alkoxy group having 1 to 4 carbon atoms, if necessary excess compounds

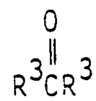

are removed, and the reaction product obtained is reacted with, relative to $R^3$ radicals, equimolar amounts of compounds of the general formula Q-OH, where Q is as already defined, or

b) first compounds of the formula Q-OH are reacted with at least equimolar amounts of compounds of the formula

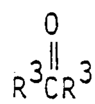

and the reaction product is reacted with equimolar amounts of the organopolysiloxane under otherwise identical reaction conditions.

**2.** Process according to Claim 1, characterised in that the reactions are carried out in the presence of solvents.

**3.** Process according to Claim 2, characterised in that, if $R^3$ is a chlorine radical, the reaction is carried out in the presence of acid scavengers, in particular lower alkylamines.

**4.** Process according to Claim 1 or 2, characterised in that, if $R^3$ is an alkoxy radical, the alcohol $R^3OH$ set free is removed by distillation.

**5.** Use of the compounds of the Claim 1 as abhesive coating materials.

**Revendications**
**Revendications pour les Etats contractants suivants : BE, CH, DE, FR, GB, IT, LI, NL**

**1.** Composés répondant à la formule générale :

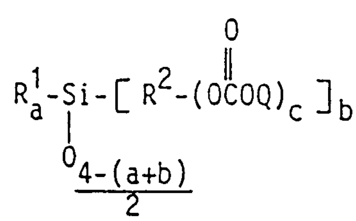

$R^1$ = un groupe alcoyle comportant 1 à 4 atomes de carbone, un groupe phényle ou un groupe alcaryle répondant à la formule générale

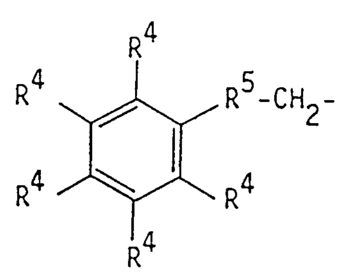

où $R^4$ sont identiques ou différents et représentent un reste d'hydrogène, un reste alcoyle comportant 1 à 12 atomes de carbone ou un reste halogène,
$R^5$ est un groupe alcoylène à chaîne droite ou ramifiée et comportant 1 à 8 atomes de carbone,
ces groupes pouvant être situés les uns à côté des autres dans la molécule moyenne,

| | |
|---|---|
| $R^2$ | = un pont hydrocarbure à valence (c + 1) comportant 1 à 20 atomes de carbone, qui peut comporter des groupes d'éthers et auquel peuvent être liés des esters de l'acide (méth)-acrylique de la chaîne latérale, |
| Q | = un reste d'un di- ou polyol, diminué d'un groupe hydroxyle, dont le(s) groupe(s) restant(s) est/sont estérifié(s) avec l'acide (méth)acrylique, |
| a | = 1,6 à 2,2, |
| b | = 0,001 à 1,6, |
| c | = 1 à 4, |
| a + b | ≦ 3. |

**2.** Procédé de préparation de composés selon la revendication 1, caractérisé en ce que a) on fait réagir des organopolysiloxanes répondant à la formule générale

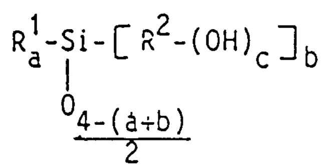

où $R^1$, $R^2$, a et b sont définis comme ci-dessus, avec des quantités au moins équimolaires, par rapport aux groupes OH, de composés répondant à la formule générale

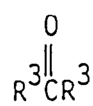

où $R^3$ = un reste de chlore ou un groupe alcoxy comportant 1 à 4 atomes de carbone, on élimine les composés

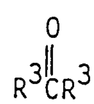

éventuellement en excès et on fait réagir le produit de réaction obtenu avec des quantités équimolaires, par rapport aux restes $R^3$, de composés répondant à la formule générale Q-OH, où Q est défini comme ci-dessus, ou
(b) on fait d'abord réagir des composés de formule Q-OH avec des quantités au moins équimolaires de composés répondant à la formule

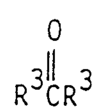

et on fait réagir le produit de réaction avec des quantités équimolaires de l'organopolysiloxane dans des conditions de réaction qui sont identiques par ailleurs.

**3.** Procédé selon la revendication 2, caractérisé en ce qu'on effectue les réactions en présence de

solvants.

4. Procédé selon la revendication 2 ou 3, caractérisé en ce qu'on travaille en présence de capteurs d'acide, en particulier d'alcoylamines inférieures, dans le cas où $R^3$ est un reste de chlore.

5. Procédé selon la revendication 2 ou 3, caractérisé en ce qu'on sépare par distillation l'alcool $R^3OH$ libéré, dans le cas où $R^3$ est un reste alcoxy.

6. Utilisation des composés selon la revendication 1 comme masses de revêtements anti-adhésives.

**Revendications pour l'Etat contractant suivant : ES**

1. Procédé de préparation d'organopolysiloxanes contenant des groupes esters de l'acide (méth)acrylique, répondant à la formule générale

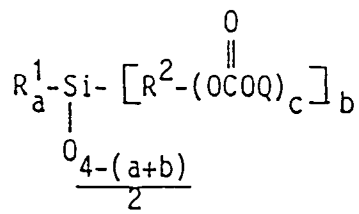

ou

$R^1$ = un groupe alcoyle comportant 1 à 4 atomes de carbone, un groupe phényle ou un groupe alcaryle répondant à la formule générale

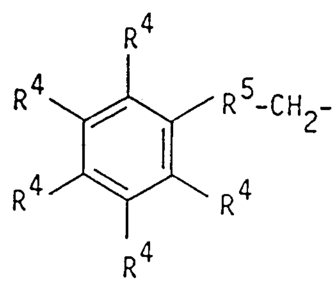

où $R^4$ sont identiques ou différents et représentent un reste d'hydrogène, un reste alcoyle comportant 1 à 12 atomes de carbone ou un reste halogène,
$R^5$ est un groupe alcoylène à chaîne droite ou ramifiée et comportant 1 à 8 atomes de carbone,
ces groupes pouvant être situés les uns à côté des autres dans la molécule moyenne,

$R^2$ = un pont hydrocarbure à valence (c + 1) comportant 1 à 20 atomes de carbone, qui peut comporter des groupes d'éthers et auquel peuvent être liés des esters de l'acide (méth)-acrylique de la chaîne latérale,

Q = un reste d'un di- ou polyol, diminué d'un groupe hydroxyle, dont le(s) groupe(s) restant(s) est/sont estérifié(s) avec l'acide (méth)acrylique,

a = 1,6 à 2,2,

b = 0,001 à 1,6,

c = 1 à 4,

a + b ≦ 3,

caractérisé en ce que a) on fait réagir des organopolysiloxanes répondant à la formule générale

$$R^1_a\text{-}\underset{\substack{| \\ O_{\frac{4-(a+b)}{2}}}}{Si}\text{-}\left[R^2\text{-}(OH)_c\right]_b$$

où $R^1$, $R^2$, a, b et c sont définis comme ci-dessus, avec des quantités au moins équimolaires, par rapport aux groupes OH, de composés répondant à la formule générale

$$R^3\overset{\overset{O}{\|}}{C}R^3$$

où $R^3$ = un reste de chlore ou un groupe alcoxy comportant 1 à 4 atomes de carbone, on élimine les composés

$$R^3\overset{\overset{O}{\|}}{C}R^3$$

éventuellement en excès et on fait réagir le produit de réaction obtenu avec des quantités équimolaires, par rapport aux restes $R^3$, de composés répondant à la formule générale Q-OH, où Q est défini comme ci-dessus, ou
(b) on fait d'abord réagir des composés de formule Q-OH avec des quantités au moins équimolaires de composés répondant à la formule

$$R^3\overset{\overset{O}{\|}}{C}R^3$$

et on fait réagir le produit de réaction avec des quantités équimolaires de l'organopolysiloxane dans des conditions de réaction qui sont identiques par ailleurs.

**2.** Procédé selon la revendication 1, caractérisé en ce qu'on effectue les réactions en présence de solvants.

**3.** Procédé selon la revendication 2, caractérisé en ce qu'on travaille en présence de capteurs d'acide, en particulier d'alcoylamines inférieures, dans le cas où $R^3$ est un reste de chlore.

**4.** Procédé selon la revendication 1 ou 2, caractérisé en ce qu'on sépare par distillation l'alcool $R^3OH$ libéré, dans le cas où $R^3$ est un reste alcoxy.

**5.** Utilisation des composés selon la revendication 1 comme masses de revêtements anti-adhésives.